# EUROPEAN PATENT APPLICATION

(11) **EP 4 826 868 A1**
(43) Date of publication of application: **21.10.2026**
(21) Application number: 26162940.6
(22) Date of filing: 06.03.2026
(51) Int. Cl.: H01M 50/209, H01M 50/358, H01M 50/367, H01M 50/383

(54) **BATTERY STRUCTURE AND METHOD FOR MANUFACTURING BATTERY STRUCTURE**

(30) Priority: 15.04.2025 KR 20250048535
(71) Applicant: SAMSUNG SDI CO., LTD., Yongin-si, Gyeonggi-do 17084 (KR)
(72) Inventor: SHIN, Mincheol, 17084 Yongin-Si, Gyeonggi-do (KR)
(74) Representative: Gulde & Partner

(57) **Abstract**

A battery structure includes: a plurality of battery cells along one direction, each of the battery cells including a vent in one surface thereof; and a vent duct on the battery cells to correspond to the vent of each of the battery cells, the vent duct being in communication with the vent and configured to flow a gas discharged from the vent. The vent duct includes: a base portion having openings located on opposite sides thereof, the base portion including a plurality of vent holes in a surface adjacent to the battery cells at positions corresponding to the vents of the battery cells, respectively; and a plurality of partitions inside the base portion between the plurality of vent holes, the plurality of partitions defining a flow path for the gas discharged from the vent.

## Description

### BACKGROUND

### 1. Field

Aspects of embodiments of the present disclosure relate to a battery structure, and a method for manufacturing the battery structure.

### 2. Description of the Related Art

Unlike primary batteries that are not designed to be re-charged, secondary (rechargeable) batteries are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power, for example, at a home or utility scale. A secondary battery generally includes an electrode assembly composed of a positive electrode and a negative electrode, a case accommodating the electrode assembly, and electrode terminals connected to the electrode assembly.

During discharge or charge of a secondary battery (or a battery cell), heat may be generated. When the heat generation continues, a thermal runaway of the secondary battery may progress, and a fire may occur in a device or a system on which the secondary battery is mounted.

The above information disclosed in this Background section is for enhancement of understanding of the background of the present disclosure, and therefore, it may contain information that does not constitute related (or prior) art.

### SUMMARY

In a module structure (e.g., a battery module) in which battery cells are aligned, when a thermal runaway progresses in a battery cell (e.g., a specific battery cell), a large amount of gas may be generated and flames may occur due to an internal short in the battery cell. When a separate duct, through which the generated gas is discharged to the outside, is formed on an upper side of the battery cells in the battery module, not only the gas, but also the flames may be exposed to the outside of the duct, which may be undesirable (e.g., may be problematic).

Embodiments of the present disclosure may be directed to a battery structure, and a method for manufacturing the battery structure.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a battery structure includes: a plurality of battery cells along one direction, each of the battery cells including a vent in one surface thereof; and a vent duct on the battery cells to correspond to the vent of each of the battery cells, the vent duct being in communication with the vent and configured to flow a gas discharged from the vent. The vent duct includes: a base portion having openings located on opposite sides thereof, the base portion including a plurality of vent holes in a surface adjacent to the battery cells at positions corresponding to the vents of the battery cells, respectively; and a plurality of partitions inside the base portion between the plurality of vent holes, the plurality of partitions defining a flow path for the gas discharged from the vent.

The battery structure provides a safety system to manage the hazardous effects of a thermal runaway, where a battery cell uncontrollably overheats and ejects high-pressure gas and flames. The structure features a specialized vent duct that covers the safety vents of a series of battery cells. The innovation lies in the inclusion of internal partitions within this duct. These partitions are arranged to define a specific flow path for the ejected gas. This structure controls the gas release by preventing an instantaneous, explosive discharge, thereby managing pressure and reducing the risk of mechanical damage. The partitions act as physical barriers that block flames from spreading to adjacent, healthy cells, which is crucial for preventing a catastrophic chain reaction. Finally, the defined flow path guides the hot, hazardous gas in a controlled manner toward designated openings on the duct, ensuring it is vented safely away from the battery module.

In an embodiment, the base portion may include: a first base portion including the plurality of vent holes, the first base portion being seated on a side where the vents of the battery cells are located, and having an inner surface contacting one side of each of the partitions; and a second base portion coupled to the first base portion, and having an inner surface contacting another side of each of the partitions.

A technical effect of this two-part design is an improvement in manufacturability and assembly accuracy. The assembly process becomes a simple, sequential layering. First, the open-topped lower portion is placed over the battery cells. Then, the internal partitions can be easily and precisely positioned inside it, as the assembly is still open from above. This allows for straightforward placement and inspection, ensuring the partitions that define the critical gas flow path are correctly located. The upper portion is coupled on top to complete and seal the duct. This method is far more reliable and efficient than attempting to insert partitions into a pre-formed, single-piece hollow duct. By sandwiching the partitions between the inner surfaces of the lower and upper base portions, the partitions are held firmly in place.

In an embodiment, the flow path for the gas discharged from the vent may be defined by the inner surface of the first base portion, the inner surface of the second base portion, and the plurality of partitions, and may be configured to discharge the gas through the openings.

A technical effect is the creation of a fully enclosed and sealed flow path. By ensuring the gas is contained on all sides, by the partitions laterally and by the base portions vertically, the structure prevents any unintended leakage of high-pressure gas or flames from the top or bottom of the duct. This guarantees that the hazardous byproducts are forced to follow the tortuous path defined by the partitions.

In an embodiment, the openings may be located outside the plurality of battery cells in the one direction, and at least one of the partitions may be located in an opening of the openings to close at least a part of the opening.

The first feature specifies that the exhaust openings are located outside the physical footprint of the battery cell stack. The technical effect is the spatial separation of the hot, high-pressure exhaust gas from the healthy, adjacent battery cells. This is a safety advantage, as it prevents the vented gas from directly impinging on other cells, which could cause them to overheat and trigger a wider thermal runaway. It effectively isolates the hazardous venting process from the rest of the battery module. The second feature introduces a partition that is deliberately placed within the exhaust opening itself, acting as a final gatekeeper. The technical effect of this is to provide a final stage of control and filtering just before the gas exits the duct. This partition serves as a final flame arrestor, extinguishing any residual flames that may have survived the journey through the internal flow path. Additionally, it acts as a final baffle, further slowing the gas flow, reducing the final exit pressure, and capturing any solid fragments.

In an embodiment, the plurality of partitions may extend in a width direction of the base portion to cover the vents, and may be alternately located in a zigzag pattern along a length direction of the base portion corresponding to the one direction.

An advantage of this zigzag arrangement is the creation of a tortuous flow path. Instead of having a direct line of sight down the duct, the hot gas and flames ejected from a failing cell are forced to navigate a complex, winding route around the alternating partitions. This path increases the travel distance for the gas, giving it more time and surface area to cool down by transferring heat to the partitions and duct walls. Furthermore, the constant changes in direction induce turbulence, which helps to dissipate the energy of the initial blast and extinguish flames. Finally, each turn acts as a baffle, progressively slowing the gas flow and reducing its pressure.

In an embodiment, the plurality of partitions may extend in a width direction of the base portion to cover the vents while inclined at an angle, and may be alternately located in a zigzag pattern along a length direction of the base portion corresponding to the one direction.

The primary technical effect of inclining the partitions is the deflection of gas and fragments. Instead of impacting a flat, perpendicular wall, the high-velocity gas and any accompanying solid debris strike a ramp-like, angled surface. This smoothly redirects their momentum along the intended flow path rather than abruptly stopping it. During a cell explosion, solid fragments can be ejected. If these fragments were to hit flat partitions, they could accumulate and clog the vent path, causing a catastrophic pressure build-up. The inclined surfaces ensure that debris is deflected and carried along by the gas flow, keeping the path clear. This makes the safety system more robust and reliable by ensuring it remains functional even during the most severe failure events.

In an embodiment, the plurality of partitions may extend in a width direction of the base portion to cover the vents while ends of the partitions adjacent to the vents may be inclined at an angle, and may be alternately located in a zigzag pattern along a length direction of the base portion corresponding to the one direction.

This inclined end immediately deflects ejected gas and solid debris, guiding them smoothly into the zigzag flow path. This leads to an advantageously optimized debris management and improved manufacturing simplicity. By placing the anti-clogging feature precisely where it is needed most, it very effectively prevents the vent opening itself from being blocked at the onset of a failure. The rest of the partition can be a simple, straight wall, which is often easier to manufacture and install, while still serving as a robust barrier.

In an embodiment, the partitions may include a porous flame-retardant material.

This leads to a selective permeability. The material is designed to allow gas to pass directly through its porous structure, while simultaneously blocking and extinguishing flames. This means that during a thermal runaway, the high-pressure gas is not restricted to flowing only around the partitions in the zigzag path; it can now also flow through them. This creates a larger surface area for venting, which lowers the build-up of backpressure inside the duct. By providing many parallel paths for the gas to escape, the venting process becomes much more efficient and less violent, reducing the mechanical stress on the entire battery module and minimizing the risk of a rupture.

In an embodiment, the partitions may extend in a width direction of the base portion to cover the vents, and may be alternately located in a zigzag pattern along a length direction of the base portion corresponding to the one direction to prevent a flame movement between adjacent battery cells among the battery cells.

The zigzag pattern creates a long, tortuous physical path that forces hot gas to travel a greater distance, dissipating energy, reducing pressure, and cooling the flow. As the gas navigates this labyrinth, it is simultaneously able to pass through the porous partitions, where the flame-retardant material actively works to extinguish any flames. Even if a flame were intense enough to survive the long, winding physical path, it is then subjected to the active quenching effect of the porous material. Conversely, the zigzag path ensures that even if the gas flow is too fast for the porous material to handle alone, the physical distance and turbulence will have already weakened the flame front.

In an embodiment, the partitions may extend to cover an entire width of an internal space of the base portion, and may be spaced from each other at intervals along a length direction of the base portion corresponding to the one direction.

The primary technical effect of this design is the creation of a multi-stage filtration system. By extending across the entire internal width of the duct, each partition acts as a complete barrier, eliminating any possibility for gas or flames to bypass it along the sides. This forces the entire volume of ejected gas to pass directly through the porous, flame-retardant material of the first partition, then into a small chamber, and then through the next partition, and so on.In an embodiment, at least one of the partitions may be coupled to at least one of opposite side ends of the base portion to close an opening among the openings.

The primary technical effect is to subject the entire volume of exiting gas to a filtration step. Unlike the internal partitions which manage flow within the duct, this end-cap partition ensures that nothing can escape to the outside environment without first passing through its flame-arresting and debris-trapping structure. This provides the advantage of serving as a non-bypassable flame arrestor. It guarantees that any residual flames that might have survived the internal flow path are extinguished at the last possible moment, ensuring the external environment remains safe.

In an embodiment, the flow path for the gas discharged from the vent may be defined by the plurality of partitions inside the base portion, and may be configured to discharge the gas to the outside of the base portion through the openings.

While the outer duct provides containment, it is the strategic placement of these internal baffles that creates the functional pathway, transforming a simple container into an engineered safety system.

According to one or more embodiments of the present disclosure, a method for manufacturing a battery structure includes: aligning, along one direction, a plurality of battery cells, each of the battery cells including a vent in one surface thereof; and disposing a vent duct to correspond to the vent of each of the battery cells. The vent duct includes: a base portion having openings formed at opposite sides thereof, the base portion including, on a surface adjacent to the battery cells, a plurality of vent holes at positions corresponding to the vents of the battery cells, respectively; and a plurality of partitions formed inside the base portion between the plurality of vent holes, the plurality of partitions defining a flow path for a gas discharged from the vents.

In an embodiment, the base portion may include: a first base portion including the plurality of vent holes, the first base portion being seated on a side where the vents of the battery cells are formed, and having an inside surface that contacts one side of the plurality of partitions; and a second base portion coupled to the first base portion, and including an inside surface that contacts another side of the plurality of partitions.

In an embodiment, the disposing of the vent duct may include: seating the first base portion on the side where the vents of the battery cells are formed; disposing the plurality of partitions at positions corresponding to spaces between the battery cells on the inside surface of the first base portion; and coupling the second base portion to the first base portion.

According to some embodiments of the present disclosure, when a thermal runaway occurs in a battery cell, a high-temperature and high-pressure gas may be ejected therefrom, and may be discharged to the outside through a flow path defined by a plurality of partitions. Accordingly, a flow of the gas may be controlled in a desired direction, and a damage that may occur when a high-temperature and high-pressure gas is instantaneously discharged to the outside may be prevented or reduced.

According to some embodiments of the present disclosure, a flame ejected when a thermal runaway occurs in a battery cell may be blocked by the plurality of partitions, thereby preventing or substantially preventing the flame from propagating to other battery cells. Accordingly, a chain thermal runaway of the other battery cells may be prevented or reduced, and an exposure of the flame to the outside may be prevented or substantially prevented.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of a battery structure according to an embodiment of the present disclosure.
FIG. 2 is a perspective view illustrating a state in which a battery cell of a battery structure undergoes a thermal runaway according to an embodiment of the present disclosure.
FIG. 3 is a plan view from above the battery structure of FIG. 2.
FIG. 4 is a perspective view of a battery structure according to a comparative example.
FIG. 5 is a schematic view illustrating an exposure of a flame to the outside in the battery structure according to the comparative example.
FIG. 6 is a perspective view illustrating an example of a battery structure including partitions inclined at an angle according to an embodiment of the present disclosure.
FIG. 7 is a schematic view illustrating a state in which a battery cell undergoes a thermal runaway in the battery structure of FIG. 6.
FIG. 8 is a perspective view illustrating an example of a battery structure including partitions according to an embodiment of the present disclosure.
FIG. 9 is a schematic view illustrating a state in which a battery cell undergoes a thermal runaway in the battery structure of FIG. 8.
FIG. 10 is a perspective view illustrating an example of a battery structure including porous partitions according to an embodiment of the present disclosure.
FIG. 11 is a schematic view illustrating a state in which a battery cell undergoes a thermal runaway in the battery structure of FIG. 10.
FIG. 12 is a perspective view illustrating an example of a battery structure including porous partitions according to an embodiment of the present disclosure.
FIG. 13 is a schematic view illustrating a state in which a battery cell undergoes a thermal runaway in the battery structure of FIG. 12.
FIG. 14 is a perspective view illustrating an example of a battery structure including porous partitions applied to openings according to an embodiment of the present disclosure.
FIG. 15 is a schematic view illustrating a state in which a battery cell undergoes a thermal runaway in the battery structure of FIG. 14.
FIG. 16 is a flowchart illustrating a method for manufacturing a battery structure according to an embodiment of the present disclosure.
FIG. 17 is a perspective view illustrating a process of seating a first base portion on an upper surface of battery cells.
FIG. 18 is a perspective view illustrating a process of disposing a plurality of partitions.
FIG. 19 is a perspective view illustrating a process of coupling a second base portion.
FIG. 20 is a perspective view of a completed battery structure of a method for manufacturing the battery structure according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C", at least one of A, B or C", "at least one selected from a group of A, B and C", or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use", "using", and "used" may be considered synonymous with the terms "utilize", "utilizing", and "utilized", respectively. As used herein, the terms "substantially", "about", and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

Unless the context clearly specifies that an expression is singular, the singular expression in the present specification includes the plural expression, and vice versa. Throughout the specification, when a part is described as including a certain component, unless specifically stated otherwise, the description does not exclude the presence of other components, and other components may be further included.

In the present disclosure, layers and regions illustrated in the drawings may have sizes and relative sizes exaggerated for clarity of explanation. Therefore, the sizes shown in the drawings are merely for convenience of understanding and are not limiting. In addition, the same reference numerals throughout the specification denote the same components.

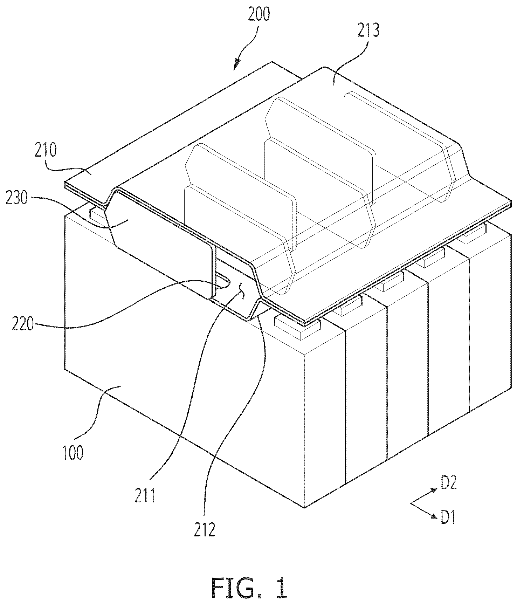

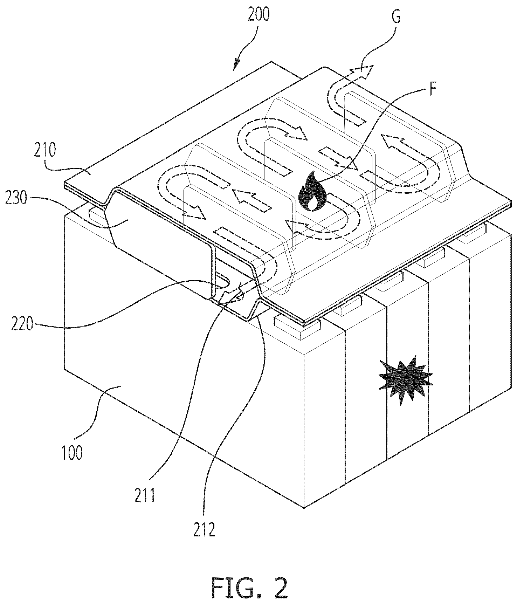

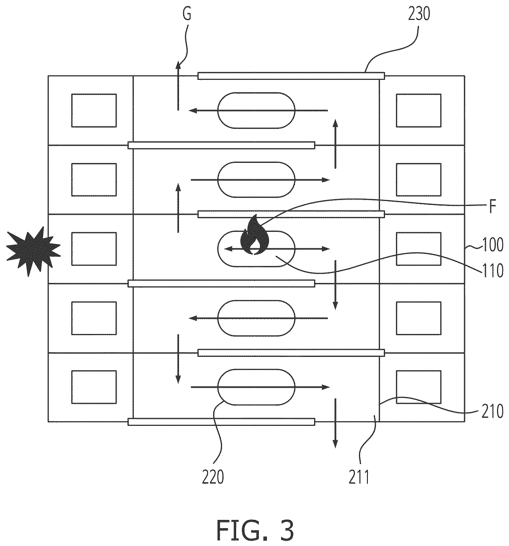

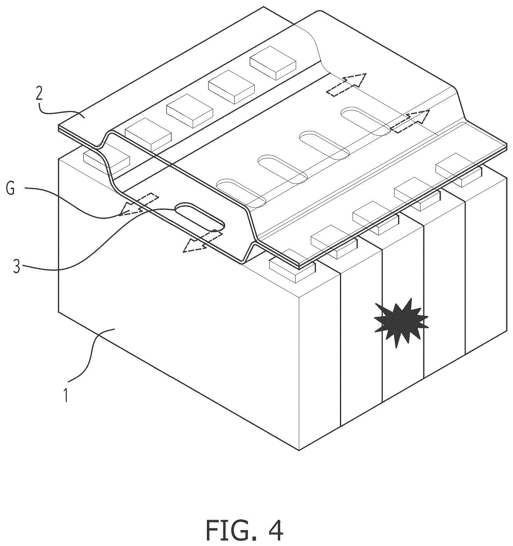

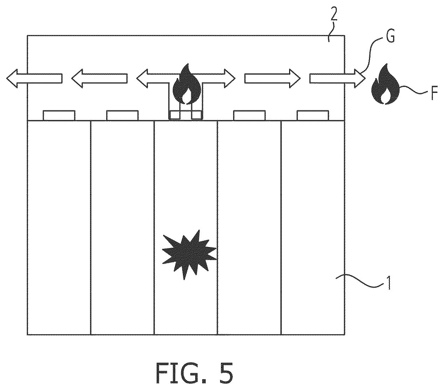

FIG. 1 is a perspective view illustrating an example of a battery structure according to an embodiment of the present disclosure. FIG. 2 is a perspective view illustrating a state in which a battery cell of a battery structure undergoes a thermal runaway according to an embodiment of the present disclosure. FIG. 3 is a plan view from above the battery structure of FIG. 2. FIG. 4 is a perspective view of a battery structure according to a comparative example. FIG. 5 is a schematic view illustrating an exposure of a flame to the outside in the battery structure according to the comparative example.

Referring to FIGS. 1 through 3, a battery structure according to an embodiment of the present disclosure may include a plurality of battery cells 100 aligned along one direction, and a vent duct 200 arranged to communicate with vents 110 formed at the top of the plurality of battery cells 100. The vent duct 200 may include a base unit (e.g., a base portion or a base plate) 210 forming its overall outer shape, and a plurality of partitions 230 forming a flow path for a gas discharged from the vent 110 inside the base unit 210.

In an embodiment, the plurality of battery cells 100 are aligned along one direction, and may each include the vent 110 on a surface (e.g., a top surface) thereof. For example, the plurality of battery cells 100 may be arranged in series along the D2 direction. Additionally, the plurality of battery cells 100 may be aligned so that their wider sides face one another. Within the battery structure, the battery cells 100 may be provided in a suitable number corresponding to a desired or required amount of power. The plurality of battery cells 100 are capable of charging and discharging, and may generate heat during a charging/discharging process.

The battery cell 100 may be a lithium battery cell, a sodium battery cell, or the like. However, the present disclosure is not limited thereto, and the battery cell 100 may include any suitable kind of battery capable of repeatedly providing electricity through charging and discharging. In an embodiment, when the battery cell 100 is a lithium battery cell, it may have excellent lifecycle characteristics and high-rate characteristics, allowing its use in an electric vehicle (EV). For example, the battery cell 100 may be used in hybrid vehicles, such as a plug-in hybrid electric vehicle (PHEV). Additionally, lithium battery cells may be used in various suitable fields desiring or requiring a large amount of power storage, for example, such as in electric bicycles, power tools, or energy storage systems (ESS).

Each battery cell 100 may include at least one electrode assembly, a case, and a cap plate. The electrode assembly may include a separator, which is an insulator, that is interposed between a positive electrode and a negative electrode, and wound or stacked together. The case may accommodate the electrode assembly, and the cap plate may be coupled to an open end of the case. The plurality of battery cells 100 may be cylindrical cells, prismatic cells, or pouch cells, but the present disclosure is not limited to a kind or a shape thereof.

The plurality of battery cells 100 may include the vents 110 in one surface thereof. For example, the vents 110 may be formed in the upper surfaces or in the cap plates of the battery cells 100. Each vent 110 may be opened or ruptured if (e.g., when) an internal pressure of the corresponding battery cell 100 exceeds a critical pressure (e.g., a predetermined critical pressure). The critical pressure may be different (e.g., may be set differently) according to a field of use, a material, or a purpose of the battery cell 100. The vent 110 may serve as an exhaust passage for the gas (G) generated inside the battery cell 100. While a single vent 110 is illustrated as being formed in each of the battery cells 100, the present disclosure is not limited thereto, and any suitable number of vents 110 may be additionally formed at any suitable position.

In an embodiment, the vent duct 200 may be arranged to correspond to each of the vents 110 of the plurality of battery cells 100. The vent duct 200 may be in fluid communication with the vent 110 so that the gas (G) exhausted from the vent 110 flows therein. The vent duct 200 may include openings 211 formed on both sides (e.g., opposite sides) thereof. The opening 211 may serve as a passage for the gas (G) emitted from the vent 110 to be discharged externally.

The vent duct 200 may include the base portion 210 that has a plurality of vent holes 220. The plurality of vent holes 220 may be formed at positions corresponding to the vents 110 of the plurality of battery cells 100 on one surface of the base portion 210 that is adjacent to the plurality of battery cells 100. The openings 211 may be formed on both sides (e.g., opposite sides) of the base portion 210. Hereinafter, a width direction of the base portion 210 may refer to the D1 direction, and a length direction of the base portion 210 may refer to the D2 direction.

The vent duct 200 may include the plurality of partition walls 230 formed inside the base portion 210. The plurality of partition walls 230 forms a flow path for the gas (G) discharged from the vent 110, and may be positioned between the plurality of vent holes 220. Additionally, the plurality of partition walls 230 may prevent or substantially prevent the spread of flames (F) that may be discharged during a thermal runaway of a battery cell 100 to other adjacent battery cells 100. Furthermore, the plurality of partition walls 230 may suppress a movement of fragments that may be generated during an explosion of a battery cell 100, thereby preventing or substantially preventing a further spread of a fire due to internal fragments.

The base portion 210 may include a first base portion 212 and a second base portion 213. The first base portion 212 may include the plurality of vent holes 220 formed on one surface thereof, and may be seated on one side of the plurality of battery cells 100 aligned along one direction where the vents 110 are formed. The first base portion 212 may include an inner surface that contacts one side of the plurality of partitions 230. The second base portion 213 may be coupled to the first base portion 212. The second base portion 213 may include an inner surface that contacts the upper side of the plurality of partitions 230.

In an embodiment, the gas (G) discharged from the vent 110 may move along the flow path formed by the plurality of partitions 230 formed inside the base portion 210, and may be discharged to the outside of the base portion 210 through the openings 211.

The gas G discharged from the vents 110 may move along a flow path defined by the inner surface of the first base portion 212, the inner surface of the second base portion 213, and the plurality of partitions 230, and may be discharged through the openings 211. Consequently, the gas G discharged from the vents 110 may flow in an intended direction (e.g., a desired direction or a defined direction) along the flow path defined by the plurality of partitions 230, and damage that may occur when a high-temperature and high-pressure gas G is instantaneously discharged to the outside of the base portion 210 may be prevented or reduced.

In an embodiment, the openings 211 may be disposed outside the plurality of battery cells 100 aligned along one direction. At least one of the plurality of partitions 230 may be disposed in the opening 211 to close at least a part of the opening 211. This may prevent or reduce damage that may be caused by the high-temperature and high-pressure gas G being discharged all at once to the outside of the base portion 210. Additionally, a flame F ejected during the thermal runaway of a battery cell 100 may be minimized or reduced in an exposure to the outside of the base portion 210.

The plurality of partitions 230 may be extended to cover the sides of the vents 110 of each of the battery cells 100, preventing or substantially preventing the flames F discharged from a battery cell 100 from spreading to other battery cells 100. The plurality of partitions 230 may be alternately arranged in a zigzag pattern along the length direction of the base portion 210 (e.g., the D2 direction). Accordingly, a discharge speed of the gas G discharged from the inside of the base portion 210 to the outside may be controlled, and a flow of the gas G may be guided in an intended direction through the flow path defined by the plurality of partitions 230.

Referring to FIGS. 4 and 5, a battery structure according to the comparative example may include a vent duct 2 that does not contain any partitions. According to the comparative example, if an event, such as a thermal runaway, occurs in any battery cell 1, the vent gas G and the flame F passing through a vent hole 3 may be exposed to the outside of the vent duct 2. Additionally, a high-temperature and high-pressure gas G may be ejected into the vent duct 2 all at once, and a thermal event occurring in some battery cells 1 may propagate to other battery cells 1 inside the battery pack, leading to a chain reaction.

According to an embodiment of the present disclosure, the vent duct 200 may prevent or substantially prevent exposure of a flame generated when the battery cell 100 ignites, and may smoothly guide the gas G generated when the battery cell 100 ignites toward the openings 211 along the flow path defined by the plurality of partitions 230 formed inside the vent duct 200.

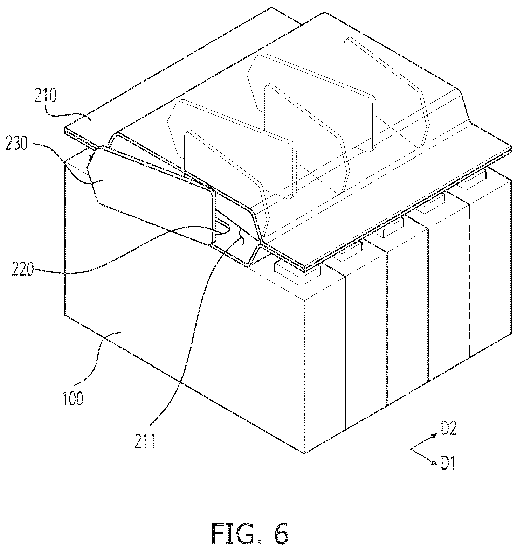

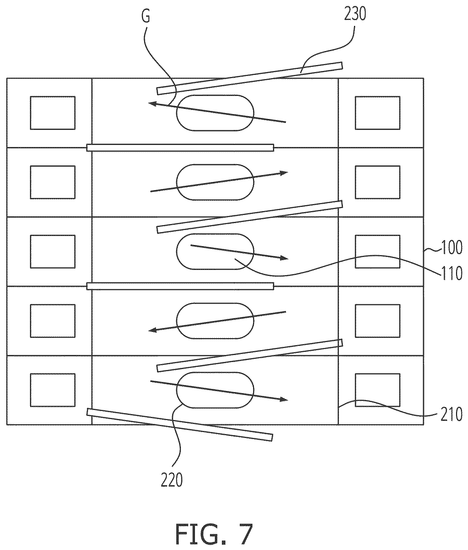

FIG. 6 is a perspective view illustrating an example of a battery structure including partitions inclined at an angle (e.g., a predetermined angle) according to an embodiment of the present disclosure. FIG. 7 is a schematic view illustrating a state in which a battery cell undergoes a thermal runaway in the battery structure of FIG. 6.

The plurality of partitions 230 may extend in the width direction of the base portion 210 (e.g., the D1 direction) to cover the vents 110 while being inclined at an angle (e.g., a predetermined angle) with respect to the width direction of the base portion 210. The plurality of partitions 230 may be alternately arranged in a zigzag pattern along the length direction of the base portion 210 (e.g., the D2 direction), while being inclined at the angle. Gas G generated from the vents 110 may be discharged through the vent holes 220, and may move toward the openings 211 along the plurality of partitions 230.

The plurality of partitions 230, which may be inclined at the angle with respect to the width direction (e.g., in the D1 direction) of the base portion 210, may guide a flow of the gas G in a desired direction. In some embodiments, the plurality of partitions 230 inclined at the angle may prevent or substantially prevent fragments that may be generated during an explosion of a battery cell 100 from adhering to or piling up on the partitions 230 and blocking the flow of the gas G.

For example, if (e.g., when) a thermal runaway occurs in a battery cell 100, gas (G) may move along the plurality of inclined partitions 230, and based on their inclined directions, the plurality of inclined partitions 230 may establish to which of the openings 211 formed on either side of the base portion 210 the gas (G) will be discharged. By further adjusting the angles of inclination of the partitions 230, the discharge speed of the gas (G) through the flow path or the amount of the gas (G) discharged to the exterior of the base portion 210 may be controlled.

The plurality of partitions 230 may extend in the width direction of the base portion 210 (e.g., the D1 direction), in a state inclined at an angle (e.g., a predetermined angle), to cover the side surfaces of the vents 110. The plurality of partitions 230 are extended to cover the side surfaces of the vent 110, such that the flame F discharged from the vent 110 of a battery cell 100 may be prevented or substantially prevented from propagating to another battery cell 100.

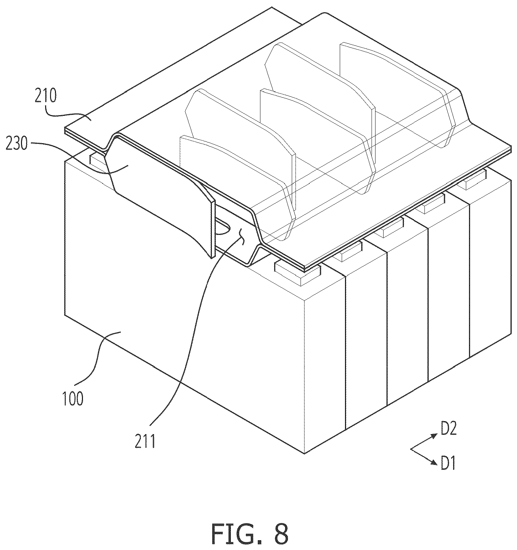

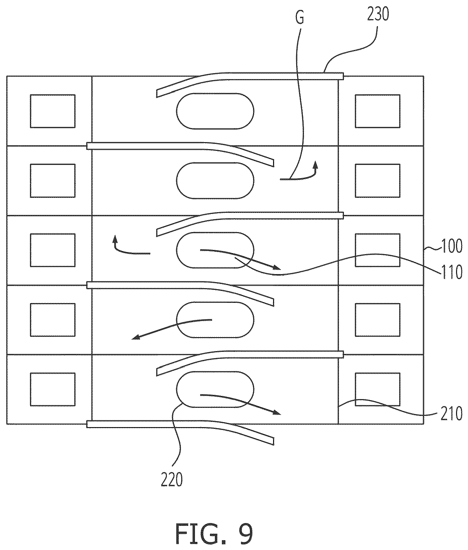

FIG. 8 is a perspective view illustrating an example of a battery structure including partitions according to an embodiment of the present disclosure. For example, the partitions in FIG. 8 may be different from the partitions of FIG. 6. FIG. 9 is a schematic view illustrating a state in which a battery cell undergoes a thermal runaway in the battery structure of FIG. 8.

Referring to FIGS. 8 and 9, in an embodiment, each partition 230 may extend in the width direction of the base portion 210 to cover a side of the vent 110, while an end of the partition 230 adjacent to the vent 110 may be inclined at an angle (e.g., a predetermined angle) with respect to the width direction (e.g., D1 direction) of the base portion 210. The plurality of partitions 230 may be alternately arranged in a zigzag pattern along the length direction of the base portion 210 (e.g., the D2 direction). Gas (G) generated from the vent 110 may be discharged through the vent holes 220, and may move toward the openings 211 along the plurality of partitions 230.

Each of the plurality of partitions 230 may be formed with one end adjacent to the vent 110 that is inclined at an angle (e.g., a predetermined angle) based on the width direction of the base portion 210. The plurality of partitions 230 may guide the flow of gas (G) in the intended direction along the flow path formed by the partitions 230. Additionally, by the inclined end of the plurality of partitions 230, fragments that may be generated during the explosion of a battery cell 100 may be prevented or substantially prevented from adhering to or piling up on the partition 230, thereby preventing or substantially preventing an obstruction to the flow of the gas (G).

When a thermal runaway occurs in the battery cell 100, the gas G may move along the plurality of partitions 230, and the fragments that may be generated during the explosion of the battery cell 100 may be guided by the inclined one-end of the partitions 230, so that, after a period of time (e.g., a certain or predetermined period of time) has elapsed following the thermal runaway and the temperature has lowered, the fragments may be discharged through the opening 211.

The plurality of partitions 230 may extend in the width direction of the base portion 210 to cover the side surfaces of the vents 110, and may have an end adjacent to the vent 110 that is inclined at an angle (e.g., a predetermined angle). The partitions 230 may be designed to prevent or substantially prevent the flames (F) that may be discharged from the vent 110 of a battery cell 100 from spreading to other battery cells 100.

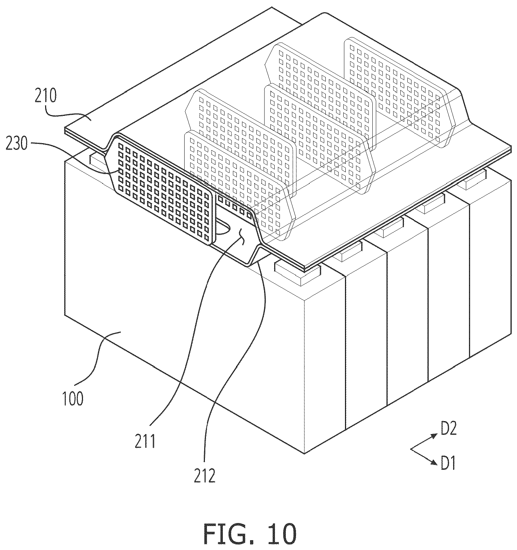

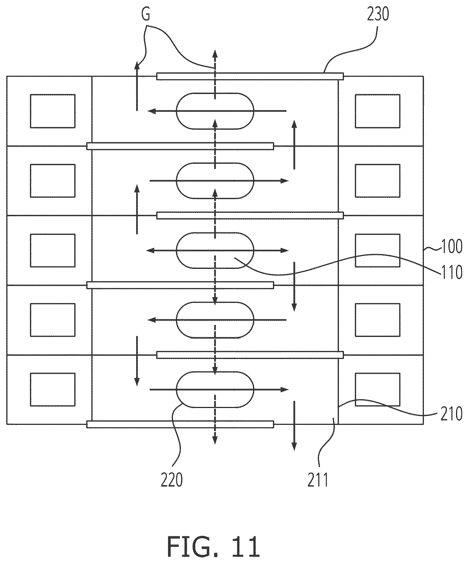

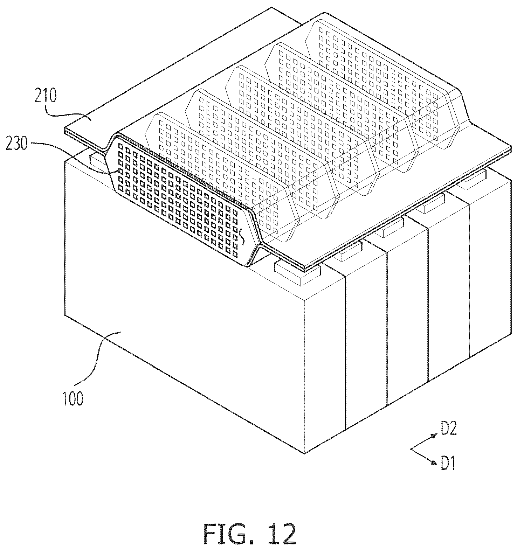

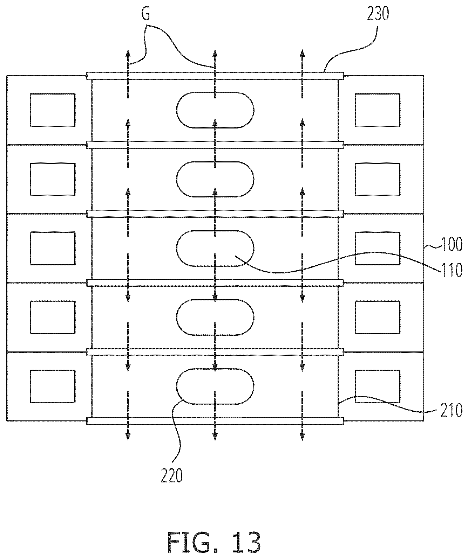

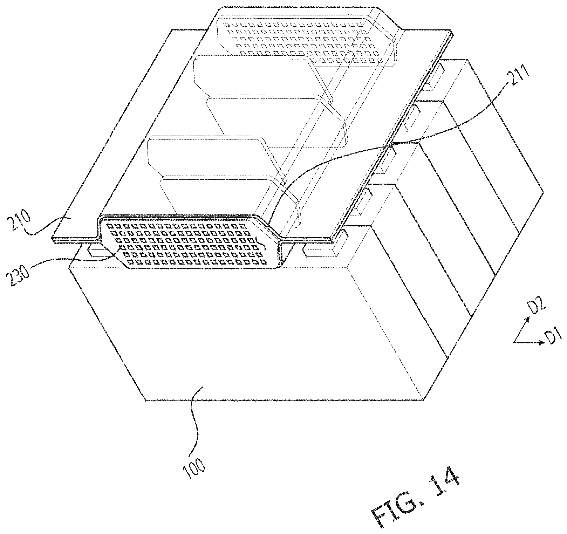

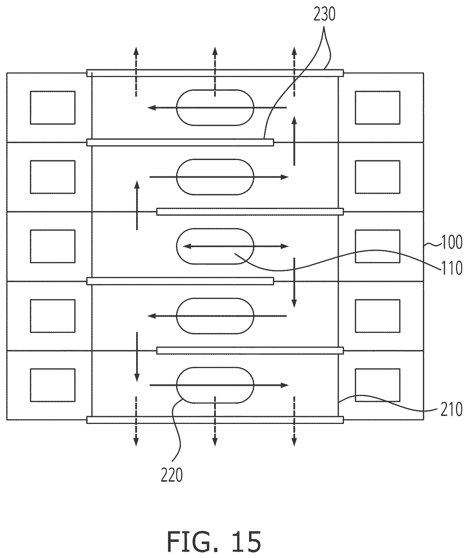

FIG. 10 is a perspective view illustrating an example of a battery structure including porous partitions according to an embodiment of the present disclosure. FIG. 11 is a schematic view illustrating a state in which a battery cell undergoes a thermal runaway in the battery structure of FIG. 10. FIG. 12 is a perspective view illustrating an example of a battery structure including porous partitions according to an embodiment of the present disclosure. For example, the porous partitions of FIG. 12 may be different from the porous partitions of FIG. 10. FIG. 13 is a schematic view illustrating a state in which a battery cell undergoes a thermal runaway in the battery structure of FIG. 12. FIG. 14 is a perspective view illustrating an example of a battery structure including porous partitions applied to openings according to an embodiment of the present disclosure. FIG. 15 is a schematic view illustrating a state in which a battery cell undergoes a thermal runaway in the battery structure of FIG. 14.

In some embodiments, the plurality of partitions 230 may be formed of a porous flame-retardant material. Because the plurality of partitions 230 may be formed of the porous flame-retardant material, a gas G that may be generated from the vents 110 may pass through the partitions 230, while a flame propagation may be more efficiently prevented or reduced. When a thermal runaway occurs in a battery cell 100, the gas G may be discharged through the vent hole 220 from the vent 110 of the battery cell 100.

Referring to FIGS. 10 and 11, the plurality of partitions 230 may extend in the width direction of the base portion 210 (e.g., the D1 direction) to cover side surfaces of the vents 110, and may be alternately arranged in a zigzag pattern along the length direction of the base portion 210 (e.g., the D2 direction). As such, a flame movement between adjacent battery cells 100 among the plurality of battery cells 100 may be prevented or substantially prevented. Gas G that may be discharged from the vents 110 may move along a flow path defined by the plurality of partitions 230, and may be discharged through the openings 211. For example, as shown by solid arrows in FIG. 11, the gas G may move along the flow path defined by the plurality of partitions 230. Further, as shown by dashed arrows, the gas G may pass through a plurality of holes formed in the plurality of partitions 230 to be discharged to an outside of the base portion 210.

Referring to FIGS. 12 and 13, the plurality of partitions 230 may be formed to extend to cover an entire width of an internal space of the base portion 210 in the width direction (e.g., the D1 direction), and may be spaced apart from each other and arranged at suitable intervals (e.g., predetermined intervals) along the length direction of the base portion 210 (e.g., the D2 direction). In this case, a flame movement between adjacent battery cells 100 among the plurality of battery cells 100 may be prevented more efficiently. Gas G discharged from the vents 110 may pass through the porous partitions 230, and may be discharged to an outside of the base portion 210. As shown in FIG. 13, the gas G passing through the porous partitions 230 may be represented by dotted arrows.

Referring to FIGS. 14 and 15, at least one of the plurality of partitions 230 may be coupled to at least one of both side ends (e.g., opposite side ends) of the base portion 210 to close the opening 211. A partition 230 that closes the opening 211 may be formed of the porous flame-retardant material, whereas the partitions 230 disposed in the internal space of the base portion 210 may be formed of a suitable material that is not a porous flame-retardant material. Consequently, while a flow direction of the gas G is controlled along the flow path defined by the plurality of partitions 230 disposed in the internal space, a flame discharged to an outside of the base portion 210 may be prevented or substantially prevented by the porous partition 230 coupled to the opening 211.

The gas (G) discharged from the vent 110 may move along the flow path formed by the plurality of partitions 230. As shown in FIG. 15, the gas (G) moving along the flow path formed by the plurality of partitions 230 may be represented by solid arrows. Moreover, the gas (G) moving along the flow path formed by the plurality of partitions 230 may reach the side of the opening 211, pass through the porous partition 230, and be discharged to the outside of the base portion 210. The gas (G) passing through the porous partition 230, as shown in FIG. 15, may be represented by dashed arrows.

In an embodiment, each partition 230 formed of the porous flame-retardant material may be formed by spraying a flame-retardant agent on a flat or substantially flat plate of a porous fibrous material. The flame-retardant agent (or a flame inhibitor) may be any one of ammonium polyphosphate, ammonium phosphate, dibasic ammonium phosphate, ammonium sulfate, boric acid, ammonium borate, antimony trioxide, or antimony trichloride.

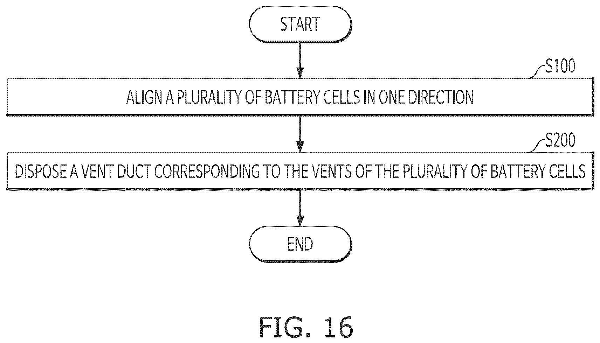

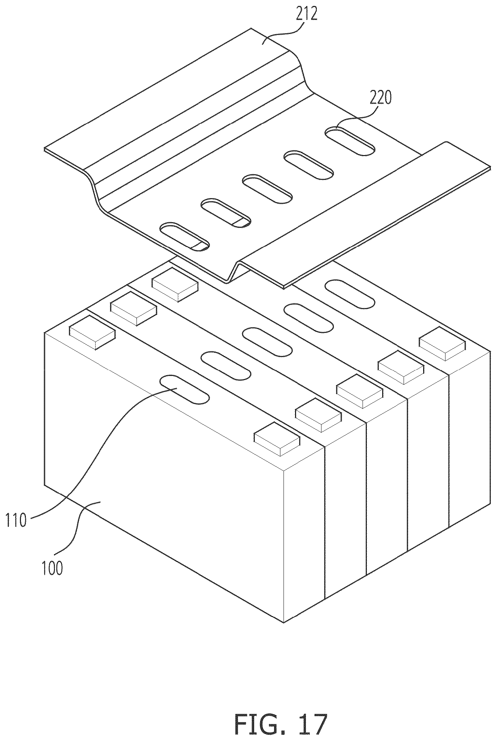

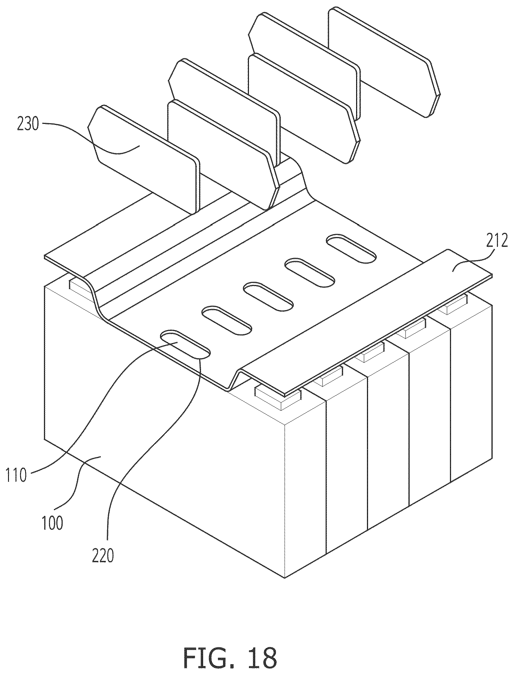

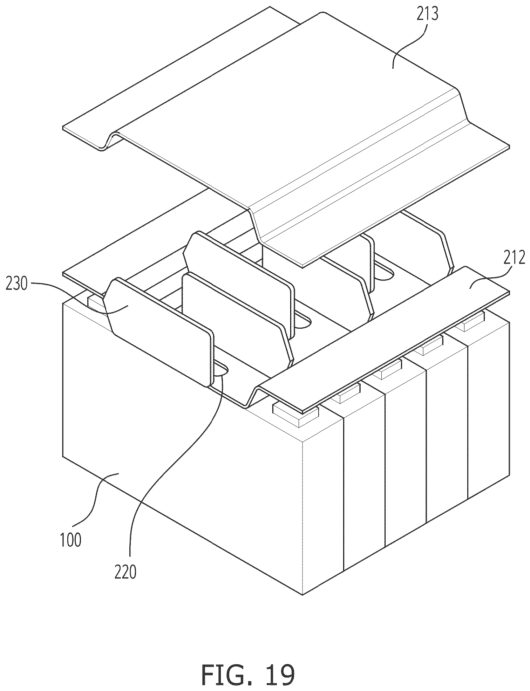

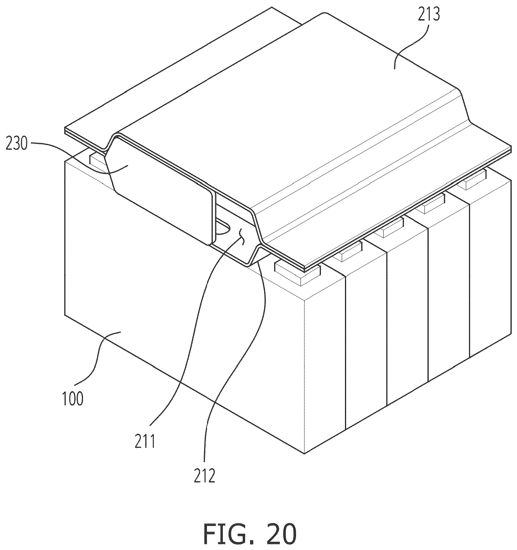

FIG. 16 is a flowchart illustrating a method for manufacturing a battery structure according to an embodiment of the present disclosure. FIG. 17 is a perspective view illustrating a process of seating a first base portion on an upper surface of battery cells. FIG. 18 is a perspective view illustrating a process of disposing a plurality of partitions. FIG. 19 is a perspective view illustrating a process of coupling a second base portion. FIG. 20 is a perspective view of a completed battery structure of a method for manufacturing the battery structure according to an embodiment of the present disclosure.

In an embodiment, a method for manufacturing a battery structure may start, and a plurality of battery cells may be aligned in one direction (S100). A vent duct corresponding to the vents of the plurality of battery cells may be disposed, and the method may end.

The aligning of the plurality of battery cells in one direction (S100) may be performed by aligning the plurality of battery cells, each including a vent in one surface thereof, along one direction. The disposing of the vent duct (S200) may be performed by disposing the vent duct on an upper surface (or in other words, a surface including the cap plates) of the battery cells aligned along one direction.

The vent duct may include the openings 211 formed at both sides (e.g., opposite sides) thereof. The vent duct may further include the base portion including the plurality of vent holes 220 formed in positions corresponding to the vents 110 of the battery cells 100, respectively, on a surface adjacent to the plurality of battery cells 100. The vent duct may further include a plurality of partitions 230 that are formed inside the base portion to define a flow path for a gas that may be discharged from the vents 110, and that are disposed between the plurality of vent holes 220.

In an embodiment, the base portion may include a first base portion 212 including the plurality of vent holes 220. The first base portion 212 may be seated on one side where the vents 110 of the plurality of battery cells 100 aligned along one direction are formed, and may include an inner surface contacting one side of each partition 230. Additionally, the base portion may include a second base portion 213 coupled to (e.g., fastened to) the first base portion 212, and including an inner surface contacting an upper side of each partition 230.

The disposing of the vent duct (S200) may include a process (e.g., see FIG. 17) of seating the first base portion 212 on a side where the vents 110 of the plurality of battery cells 100 are formed, a process (e.g., see FIG. 18) of disposing the plurality of partitions 230 at positions corresponding to spaces between the battery cells 100 on the inner surface of the first base portion 212, and a process (e.g., see FIG. 19) of coupling the second base portion 213 to the first base portion 212.

In an embodiment, the process of disposing the plurality of partitions 230 may include arranging each partition 230 approximately in the width direction of the base portion, and alternately arranging the partitions 230 in a zigzag pattern along the length direction of the base portion. In another embodiment, the process may include alternately arranging the plurality of partitions 230 inclined at an angle (e.g., a predetermined angle) with respect to the width direction of the base portion in a zigzag pattern along the length direction of the base portion.

In an embodiment, the plurality of partitions 230 may be formed of a porous flame-retardant material. For example, each partition 230 may extend to cover an entire width of an internal space of the base portion, and the process of disposing the plurality of partitions 230 may include spacing the plurality of partitions 230 apart from one another at suitable intervals (e.g., at predetermined intervals) along the length direction of the base portion.

The disposing of the vent duct (S200) may include disposing the base portion on upper sides of the plurality of battery cells 100, so that the plurality of vent holes 220 are positioned corresponding to locations of the vents 110 of the battery cells 100, respectively.

A battery structure manufactured according to some embodiments of the present disclosure may control a flow of a high-temperature and high-pressure gas that may be ejected when a thermal runaway of a battery cell progresses in an intended direction along the flow path defined by the plurality of partitions 230 disposed in an internal space of the base portion. In some embodiments, the flame that may be ejected when the thermal runaway of the battery cell 100 progresses may be blocked by the plurality of partitions 230, thereby preventing or substantially preventing a propagation of the flame to another battery cell 100.

The flowchart of FIG. 16 and the related description thereof are provided as an example, and the present disclosure is not limited thereto. For example, one or more processes in the method described above with reference to the flowchart of FIG. 16 may be added, changed, or deleted; an order of one or more processes may be changed; or one or more processes may be performed concurrently (e.g., simultaneously or substantially simultaneously) with each other.

The foregoing is illustrative of some embodiments of the present disclosure, and is not to be construed as limiting thereof. Although some embodiments have been described, those skilled in the art will readily appreciate that various modifications are possible in the embodiments without departing from the spirit and scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the spirit and scope of the present disclosure as defined in the appended claims, and their equivalents.

### DESCRIPTION OF SOME REFERENCE SYMBOLS

100: battery cell
110: vent
200: vent duct
210: base portion
211: opening
212: first base portion
213: second base portion
220: vent hole
230: partition

## Claims

1. A battery structure comprising:
a plurality of battery cells (100) along one direction, each of the battery cells (100) comprising a vent (110) in one surface thereof; and
a vent duct (200) on the battery cells to correspond to the vent (110) of each of the battery cells (100), the vent duct (200) being in communication with the vent (110) and configured to flow a gas (G) discharged from the vent (110),
wherein the vent duct (200) comprises:
a base portion (210) having openings (211) located on opposite sides thereof, the base portion (210) comprising a plurality of vent holes (220) in a surface adjacent to the battery cells (100) at positions corresponding to the vents (110) of the battery cells (100), respectively; and
a plurality of partitions (230) inside the base portion (210) between the plurality of vent holes (220), the plurality of partitions (230) defining a flow path for the gas (G) discharged from the vent (110).

2. The battery structure as claimed in claim 1, wherein the base portion (210) comprises:
a first base portion (212) comprising the plurality of vent holes (220), the first base portion (212) being seated on a side where the vents (110) of the battery cells (100) are located, and having an inner surface contacting one side of each of the partitions (230); and
a second base portion (213) coupled to the first base portion (212), and having an inner surface contacting another side of each of the partitions (230).

3. The battery structure as claimed in claim 2, wherein the flow path for the gas (G) discharged from the vent (110) is defined by the inner surface of the first base portion (212), the inner surface of the second base portion (213), and the plurality of partitions (230), and is configured to discharge the gas (G) through the openings (211).

4. The battery structure as claimed in claim 1 or 2, wherein the openings (211) are located outside the plurality of battery cells (100) in the one direction, and at least one of the partitions (230) is located in an opening of the openings (211) to close at least a part of the opening.

5. The battery structure as claimed in claim 1 or 2, wherein the plurality of partitions (230) extend in a width direction (D1) of the base portion (210) to cover the vents (110), and are alternately located in a zigzag pattern along a length direction (D2) of the base portion (210) corresponding to the one direction.

6. The battery structure as claimed in claim 1 or 2, wherein the plurality of partitions (230) extend in a width direction (D1) of the base portion (210) to cover the vents (110) while inclined at an angle, and are alternately located in a zigzag pattern along a length direction (D2) of the base portion (210) corresponding to the one direction.

7. The battery structure as claimed in claim 1 or 2, wherein the plurality of partitions (230) extend in a width direction (D1) of the base portion (210) to cover the vents (110) while ends of the partitions (230) adjacent to the vents (110) are inclined at an angle, and are alternately located in a zigzag pattern along a length direction (D2) of the base portion (210) corresponding to the one direction.

8. The battery structure as claimed in claim 1, 2 or 4 to 7, wherein the partitions (230) comprise a porous flame-retardant material.

9. The battery structure as claimed in claim 8, wherein the partitions (230) extend in a width direction (D1) of the base portion (210) to cover the vents (110), and are alternately located in a zigzag pattern along a length direction (D2) of the base portion (210) corresponding to the one direction to prevent a flame movement between adjacent battery cells (100) among the battery cells (100).

10. The battery structure as claimed in claim 8, wherein the partitions (230) extend to cover an entire width of an internal space of the base portion (210), and are spaced from each other at intervals along a length direction (D2) of the base portion (210) corresponding to the one direction.

11. The battery structure as claimed in claim 8, wherein at least one of the partitions (230) is coupled to at least one of opposite side ends of the base portion (210) to close an opening among the openings (211).

12. The battery structure as claimed in claim 1 or 2, wherein the flow path for the gas (G) discharged from the vent (110) is defined by the plurality of partitions (230) inside the base portion (210), and is configured to discharge the gas (G) to the outside of the base portion (210) through the openings (211).

13. A method for manufacturing a battery structure, comprising:
aligning, along one direction, a plurality of battery cells (100), each of the battery cells (100) comprising a vent (110) in one surface thereof; and
disposing a vent duct (200) to correspond to the vent (110) of each of the battery cells (100),
wherein the vent duct (200) comprises:
a base portion (210) having openings (211) formed at opposite sides thereof, the base portion (210) comprising, on a surface adjacent to the battery cells (100), a plurality of vent holes (220) at positions corresponding to the vents (110) of the battery cells (100), respectively; and
a plurality of partitions (230) formed inside the base portion (210) between the plurality of vent holes (220), the plurality of partitions (230) defining a flow path for a gas (G) discharged from the vents (110).

14. The method as claimed in claim 13, wherein the base portion (210) comprises:
a first base portion (212) comprising the plurality of vent holes (220), the first base portion (212) being seated on a side where the vents (110) of the battery cells (100) are formed, and having an inside surface that contacts one side of the plurality of partitions (230); and
a second base portion (213) coupled to the first base portion (212), and comprising an inside surface that contacts another side of the plurality of partitions (230).

15. The method as claimed in claim 14, wherein the disposing of the vent duct (200) comprises:
seating the first base portion on the side where the vents (110) of the battery cells (100) are formed;
disposing the plurality of partitions (230) at positions corresponding to spaces between the battery cells (100) on the inside surface of the first base portion (212); and
coupling the second base portion (213) to the first base portion (212).
